(19) 

Europäisches
Patentamt
European
Patent Office
Office européen
des brevets

(11) **EP 4 455 209 A1**

(12) **EUROPEAN PATENT APPLICATION**
published in accordance with Art. 153(4) EPC

(43) Date of publication:
**30.10.2024 Bulletin 2024/44**

(21) Application number: **22911287.5**

(22) Date of filing: **21.12.2022**

(51) International Patent Classification (IPC):
**C08L 67/00** *(2006.01)*     **B32B 27/36** *(2006.01)*
**C08G 63/688** *(2006.01)*     **C08K 5/10** *(2006.01)*
**C09D 5/00** *(2006.01)*     **C09D 11/00** *(2014.01)*
**C09D 167/00** *(2006.01)*     **C09J 167/00** *(2006.01)*

(52) Cooperative Patent Classification (CPC):
**B32B 27/36; C08G 63/688; C08K 5/10;**
**C08L 67/00; C09D 5/00; C09D 11/00;**
**C09D 167/00; C09J 167/00**

(86) International application number:
**PCT/JP2022/047138**

(87) International publication number:
**WO 2023/120585 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207556**

(71) Applicant: **TOYOBO MC Corporation
Osaka 530-0001 (JP)**

(72) Inventors:
• **MIEDA Hiroyuki
Otsu-shi, Shiga 520-0292 (JP)**
• **SUGIMOTO Kanta
Otsu-shi, Shiga 520-0292 (JP)**
• **MIKAMI Tadahiko
Otsu-shi, Shiga 520-0292 (JP)**

(74) Representative: **Müller-Boré & Partner
Patentanwälte PartG mbB
Friedenheimer Brücke 21
80639 München (DE)**

(54) **POLYESTER RESIN AQUEOUS DISPERSION COMPOSITION**

(57)     [Problem] An object of the present invention is to provide an aqueous dispersion composition containing polyester resin having high storage stability, film-forming properties, tackiness, adhesiveness, and water resistance.

[Solution] An aqueous dispersion composition containing polyester resin, comprises, a polyester resin (A), a coalescing aid (B), and an aqueous medium (C), wherein the coalescing aid (B) has a Hansen solubility parameter with a dispersion term ($\delta$d) of 15.4 MPa$^{0.5}$ or more and less than 18.0 MPa$^{0.5}$, a polarization term ($\delta$p) of 4.1 MPa$^{0.5}$ or more and less than 9.1 MPa$^{0.5}$, and a hydrogen bond term ($\delta$h) of 7.0 MPa$^{0.5}$ or more and less than 12.3 MPa$^{0.5}$.

EP 4 455 209 A1

**Description**

TECHNICAL FIELD

The present invention relates to an aqueous dispersion composition containing polyester resin, and also relates to a water-based adhesive, a water-based paint, a coating agent, and a water-based ink using the same.

BACKGROUND ART

In the field of paints, inks, coating agents, adhesives, and processing agents for fiber products and paper, the organic solvent-based products, which form films by evaporation of organic solvents such as toluene and xylene, have been conventionally dominated the market. However, due to the concern about workplace safety and the need for a reduction in environmental load, there has been a strong demand for a shift towards water-based paints. The water-based paints are represented by a water-dilutable resin and a water-dispersed resin each containing water as a medium. In the organic solvent-based paints, continuous films are formed by evaporation of organic solvents, in contrast, in the film-forming mechanism of the water-based paints, water is used as a solvent and the evaporation of water alone is not enough to promote contact and fusion between the dispersed particles, resulting in coating films with defects.
As a method for facilitating fusion among dispersed particles and forming a uniform coating film and adhesive layer without defects, an additive generally known as a coalescing aid has been used. For example, Patent Document 1 discloses an aqueous dispersion of acrylic resin (equivalent to paint) prepared by adding a coalescing aid to an acrylic resin dispersion, and Patent Document 1 also discloses aliphatic saturated carboxylic acid monoesters such as 2-ethylhexanoic acid diethylene glycol mono n-butyl ether ester and 3,5,5-trimethylhexanoic acid diethylene glycol mono n-butyl ether ester as the coalescing aids. Patent Document 2 discloses that film-forming properties can be obtained by containing a specific organic solvent in an aqueous urethane resin composition, and Patent Document 2 also discloses isophorone, 1,4-butanediol diacetate, and dipropylene glycol monomethyl ether as the organic solvents.

CITATION LIST

PATENT DOCUMENTS

   Patent Document 1: JP-A-2010-24220
   Patent Document 2: JP-B2-6249137

SUMMARY OF THE INVENTION

PROBLEMS TO BE SOLVED BY THE INVENTION

In Patent Documents 1 and 2, although the effects of the coalescing aids on the acrylic emulsion and the aqueous urethane resin are disclosed, and it has been found that sufficient film-forming properties and adhesiveness cannot be achieved when the coalescing aid is applied to the aqueous dispersion of polyester resin. The present invention has been done in view of the above circumstances, and it is an object of the present invention to provide an aqueous dispersion composition containing polyester resin having high storage stability, film-forming properties, tackiness, adhesiveness, and water resistance.

SOLUTION TO THE PROBLEMS

As a result of diligent studies to solve above problems, the present inventors have completed the present invention by finding out that an aqueous dispersion composition containing polyester resin comprising a coalescing aid having a specific Hansen solubility parameter enables improvement in storage stability and film-forming properties, and a coating film and an adhesive layer having high tackiness, adhesiveness, and water resistance can be formed as a result. The present invention has the following features.
   [1] An aqueous dispersion composition containing polyester resin, comprises, a polyester resin (A), a coalescing aid (B), and an aqueous medium (C), wherein the coalescing aid (B) has a Hansen solubility parameter with a dispersion term ($\delta$d) of 15.4 $MPa^{0.5}$ or more and less than 18.0 $MPa^{0.5}$, a polarization term ($\delta$p) of 4.1 $MPa^{0.5}$ or more and less than 9.1 MPa$^{0.5}$, and a hydrogen bond term ($\delta$h) of 7.0 MPa$^{0.5}$ or more and less than 12.3 MPa$^{0.5}$.

[2] The aqueous dispersion composition according to [1], wherein the polyester resin (A) has an ionic group at a concentration of from 5 mgKOH/g to 30 mgKOH/g, and an ionic group derived from a sulfo group at a concentration of 20 mgKOH/g or less.

[3] The aqueous dispersion composition according to [1] or [2], wherein the aqueous dispersion composition comprises the coalescing aid (B) in an amount of from 1% by mass to 20% by mass.

[4] The aqueous dispersion composition according to any one of [1] to [3], wherein the coalescing aid (B) is a compound having an ester group.

[5] The aqueous dispersion composition according to any one of [1] to [4], wherein the coalescing aid (B) has a boiling point ranging from 140°C to 370°C.

[6] A water-based adhesive comprising the aqueous dispersion composition according to any one of [1] to [5].

[7] A water-based paint comprising the aqueous dispersion composition according to any one of [1] to [5],

[8] A water-based ink comprising a coloring material and the aqueous dispersion composition according to any one of [1] to [5].

[9] A water-based coating agent comprising the aqueous dispersion composition according to any one of [1] to [5].

[10] A laminate comprising a layer A including the aqueous dispersion composition according to any one of [1] to [5] and a layer B selected from the group consisting of films, sheets, woven fabrics, nonwoven fabrics, and paper.

[11] A packaging material comprising the laminate according to [10].

ADVANTAGEOUS EFFECTS OF THE INVENTION

The aqueous dispersion composition of the present invention exhibits significantly high storage stability and film-forming properties, and also has high tackiness, water resistance, and adhesiveness, therefore, the aqueous dispersion composition is suitable for a water-based paint, a water-based ink, a surface protective coating agent for a thermoplastic resin substrate, a surface protective coating agent for a metal substrate, and an adhesive.

DESCRIPTION OF EMBODIMENTS

The followings are detailed description of the embodiments of the present invention.

<Polyester resin (A)>

The polyester resin (A) of the present invention is not particularly limited, and the polyester resin (A) is preferably a polyester having a chemical structure formed through polycondensation of a polycarboxylic acid component and a polyol component, or is a copolymer of a hydroxycarboxylic acid or a lactone. In the case of the polyester having a chemical structure formed through polycondensation of a polycarboxylic acid component and a polyol component, the polyester is preferably a copolymerized polyester resin in which at least one of the polycarboxylic acid component and the polyol component comprises 2 or more components, from the viewpoint of the dispersibility of the polyester resin in water. The polyester resin is preferably a copolymerized polyester resin mainly consisting of a dicarboxylic acid component as a polycarboxylic acid component and a glycol component as a polyol component.

The polycarboxylic acid component is preferably an aromatic dicarboxylic acid component, an alicyclic dicarboxylic acid component, or an aliphatic dicarboxylic acid component, and the aromatic dicarboxylic acid component is more preferred among them. The amount of the aromatic dicarboxylic acid component in the copolymerization is preferably 50 mol% or more, more preferably 55 mol% or more, further preferably 60 mol% or more, and particularly preferably 65 mol% or more when the total amount of the polycarboxylic acid component is defined as 100 mol%. The amount of the aromatic dicarboxylic acid component in the copolymerization of 50 mol% or more can improve storage stability and mechanical strength of the obtained coating film. The amount of the aromatic dicarboxylic acid component in the copolymerization may be 100 mol%.

When the aromatic dicarboxylic acid component is used in combination with the aliphatic dicarboxylic acid component, the ratio (molar ratio) of them (aromatic dicarboxylic acid component/aliphatic dicarboxylic acid component) is preferably from 50 to 99/from 50 to 1, more preferably from 60 to 95/from 40 to 5, and further preferably from 70 to 90/from 30 to 10. The aromatic dicarboxylic acid component in combination with the aliphatic dicarboxylic acid component can enhance adhesion to the substrate and enhance adhesiveness.

Specific examples of the aromatic dicarboxylic acid include terephthalic acid, isophthalic acid, orthophthalic acid, and naphthalene dicarboxylic acid, however, the aromatic dicarboxylic acid is not limited thereto. Specific examples of the aliphatic dicarboxylic acid include succinic acid, adipic acid, azelaic acid, sebacic acid, and dodecanedioic acid, however, the aliphatic dicarboxylic acid is not limited thereto. These dicarboxylic acid components may be used alone or in combination of 2 or more. Examples of other polycarboxylic acid components include; unsaturated aliphatic dicarboxylic acids such as fumaric acid, maleic acid, and itaconic acid; and alicyclic dicarboxylic acids such as hexahydrophthalic acid, 1,2-cyclohexanedicarboxylic acid, 1,3-cyclohexanedicarboxylic acid, and 1,4-cyclohexanedicarboxylic acid. Further, trivalent or tetravalent carboxylic acids such as trimellitic acid, trimesic acid, and pyromellitic acid, and anhydrides thereof may also be available, if needed.

The polyol component is preferably an aliphatic glycol. The amount of the aliphatic glycol component in the copolymerization is preferably 70 mol% or more, more preferably 75 mol% or more, further preferably 80 mol% or more, particularly preferably 90 mol% or more, when the total amount of the polyol component is defined as 100 mol%, and the amount of the aliphatic glycol component in the copolymerization may be 100 mol%. The amount equal to or greater than the lower limit can increase tackiness of the resulting coating film, allowing for the use as an adhesive.

Specific examples of the aliphatic glycol include ethylene glycol, propylene glycol, 1,3-propanediol, 2,2-dimethyl-1,3-propanediol, 2-methyl-1,3-propanediol (hereinafter merely 2MG in some cases), 1,4-butanediol, 1,5-pentanediol, 1,6-hexanediol, 3-methyl-1,5-pentanediol, diethylene glycol, triethylene glycol, dipropylene glycol, polyethylene glycol, polypropylene glycol, and polytetramethylene glycol, however, the aliphatic glycol is not limited thereto. These aliphatic glycols may be used alone or in combination of 2 or more. Examples of other polyol components include; alicyclic polyols such as 1,2-cyclohexanedimethanol, 1,3-cyclohexanedimethanol, 1,4-cyclohexanedimethanol, and tricyclodecanediol; and alkylene oxide adducts such as an ethylene oxide adduct and a propylene oxide adduct of bisphenol A, and an ethylene oxide adduct and a propylene oxide adduct of hydrogenatedbisphenol A. Further, the polyester resin may comprise small amount of triols and tetraols such as trimethylolethane, trimethylolpropane, glycerin, and pentaerythritol.

Also, the polyester resin (A) of the present invention is preferably a copolymer of a hydroxycarboxylic acid or a lactone. Examples of the hydroxycarboxylic acid include glycolic acid, lactic acid, and tartaric acid. Examples of the lactone include epsilon-caprolactone and gamma-butyrolactone.

To produce the polyester resin (A), a known method can be employed. For example, a desired polyester resin can be obtained by esterification of the polycarboxylic acid component and the polyol component at a temperature of from 150°C to 250°C and subsequent polycondensation at a temperature of from 230°C to 300°C while decreasing the pressure. In case where a hydrophilic polar group is introduced, monovalent inorganic salts such as sodium acetate and potassium acetate are preferably added as stabilizers in polymerization. In addition, a hindered phenol or hindered amine compound may also be added as a thermal stabilizer.

The polyester resin (A) has a glass transition temperature of preferably from -30°C to 100°C, more preferably from -25°C to 95°C, and further preferably from -20°C to 90°C. The glass transition temperature lower than the range may cause blocking of a laminate film during winding into a roll. The glass transition temperature higher than the range may cause insufficient flexibility of the resin during bonding at room temperature, resulting in decreased adhesiveness.

The polyester resin (A) is preferably an amorphous polyester resin. However, the polyester resin (A) may be a crystalline polyester resin, if the glass transition temperature is within above range. In the case of a crystalline polyester resin, the melting point is preferably 200°C or lower, more preferably 180°C or lower, and further preferably 160°C or lower. When the melting point is higher than 200°C, sufficient laminating properties may not be exhibited in lamination.

The crystalline polyester resin in the present invention is a polyester resin having a distinct melting peak during the heating process from -100°C to 250°C at a heating rate of 20°C/min conducted with a differential scanning calorimetry (DSC), and the amorphous polyester resin in the present invention is a polyester resin not having a distinct melting peak during the heating process from -100°C to 250°C at a heating rate of 20°C/min conducted with a differential scanning calorimetry (DSC).

The polyester resin (A) has a reduced viscosity ($\eta$sp/c) of preferably from 0.2 dl/g to 1.5 dl/g, more preferably from 0.3 dl/g to 1.4 dl/g, and further preferably from 0.4 dl/g to 1.3 dl/g. The reduced viscosity lower than the range may cause insufficient aggregation force, resulting in decreased adhesiveness. The reduced viscosity can be arbitrary adjusted by changing the polymerization time, the polymerization temperature, and the degree of pressure reduction during polymerization (in the case of polymerization under reduced pressure) of the polyester resin.

To improve dispersibility in water of the polyester resin of the present invention, a hydrophilic ionic group is preferably introduced into the polyester resin. Examples of the ionic groups include a carboxy group, a sulfo group, and a phosphate group, and the polyester resin may have the ionic groups in the form of a metal or an amine salt. Among them, a carboxy group, a sulfo group, and metal salts thereof are most preferred considering of drying and water resistance after film formation. The polyester resin may have 2 or more types of the ionic groups, if needed.

After the polyester resin is obtained through polymerization, a carboxy group may be introduced into the polyester resin by the method in which at least one or 2 or more selected from the following acid anhydrides are added and subjected to addition reaction under atmospheric pressure and nitrogen atmosphere. Examples of the acid anhydrides include phthalic anhydride, succinic anhydride, maleic anhydride, trimellitic anhydride, citraconic anhydride, 5-(2,5-dioxotetrahydrofuryl)-3-cyclohexene-1,2-dicarboxylic anhydride, hexahydrophthalic anhydride, tetrahydrophthalic anhydride, pyromellitic anhydride, 1,2,3,4-butane tetracarboxylic dianhydride, 1,2,3,4-pentanetetracarboxylic dianhydride, 3,3',4,4'-benzophenone tetracarboxylic dianhydride, cyclopentanetetracarboxylic dianhydride, 2,3,6,7-naphthalenetetracarboxylic dianhydride, 1,2,5,6-naphthalenetetracarboxylic dianhydride, ethylene glycol bis-trimellitate dianhydride, 2,2',3,3'-biphpenyltetracarboxylic acid dianhydride, thiophene-2,3,4,5-tetracarboxylic dianhydride, ethylenetetracarboxylic dianhydride, 4,4'-oxydiphthalic dianhydride, 5-(2,5-dioxotetrahydro-3-furanyl)-3-methyl-3-cyclohexene-1,2-dicarboxylic anhydride. Alternatively, a carboxy group may be introduced into the polyester resin by feeding the acid anhydride to oligomers before polycondensation of polyester and subsequent polycondensation reaction under reduced pressure to form a polymer. The former method is preferred as it allows desired acid value to be obtained easily. As an anhydride for the addition reaction, trimellitic anhydride is preferred from the viewpoints of versatility and economic efficiency. The carboxy group introduced in such a manner can be converted to a carboxylate by neutralizing it with an amine or alkali compound, as described below.

A sulfo group may be introduced into the polyester resin through a method in which the sulfo group is introduced via copolymerization of dicarboxylic acids having a sulfo group such as 5-sulfoisophthalic acid, 4-sulfonaphthalene-2,7-dicarboxylic acid, and 5-[4-sulfophenoxy]isophthalic acid; glycols having a sulfo group such as 2-sulfo-1,4-butanediol and 2,5-dimethyl-3-sulfo-2,5-hexanediol; or metal salts thereof. Among them, 5-sulfoisophthalic acid sodium salt is preferred due to low cost and wide applicability.

The polyester resin (A) for the present invention has an ionic group at a concentration of preferably from 5 mgKOH/g to 30 mgKOH/g to have both of dispersibility in water and water resistance. The concentration is more preferably 6 mgKOH/g or more, and further preferably 7 mgKOH/g or more. The concentration is preferably 25 mgKOH/g or less, and more preferably 20 mgKOH/g or less. The concentration of ionic group equal to or greater than the lower limit can ensure sufficient dispersion stability. The concentration equal to or lower than the upper limit may allow the coating film to have maintained water resistance and the mechanical strength, and thus the adhesiveness and the storage stability can be improved.

Among the ionic groups, the polyester resin for the present invention has an ionic group derived from a sulfo group at a concentration of preferably 20 mgKOH/g or less, more preferably 15 mgKOH/g or less, and further preferably 10 mgKOH/g or less. When the concentration of an ionic group derived from a sulfo group is equal to or lower than the upper limit, water resistance, adhesiveness, and storage stability of the coating film can be enhanced.

<Coalescing aid (B)>

The coalescing aid (B) for the present invention has a boiling point within the range of preferably from 140°C to 370°C, more preferably from 150°C to 350°C, further preferably from 160°C to 330°C, and most preferably from 170°C to 300°C from the viewpoints of tackiness and film-forming properties. The coalescing aid (B) having the boiling point within the range allows the coating film obtained by drying the aqueous dispersion to have high film-forming properties and tackiness.

The coalescing aid (B) for the present invention has a Hansen solubility parameter with a dispersion term ($\delta$d) of 15.4 $MPa^{0.5}$ or more and less than 18.0 $MPa^{0.5}$, a polarization term ($\delta$p) of 4.1 $MPa^{0.5}$ or more and less than 9.1 $MPa^{0.5}$, and a hydrogen bond term ($\delta$h) of 7.0 $MPa^{0.5}$ or more and less than 12.3 $MPa^{0.5}$.

The Hansen solubility parameter (HSP) is a value for predicting solubility of substances. HSP is based on the idea that 2 substances with similar intermolecular interactions can be dissolved readily with each other. HSP is a parameter of vector quantity obtained by splitting the Hildebrand solubility parameter into 3 cohesive energy components of London dispersion forces, dipole-dipole interactions, and hydrogen bonding. In the present invention, one of the components of the Hansen solubility parameters corresponding to the London dispersion forces is represented as a dispersion term (hereinafter merely "$\delta$d" in some cases), another one corresponding to the dipole-dipole interactions is represented as a polarization term (hereinafter merely "$\delta$p" in some cases), and the remaining one corresponding to the hydrogen bonding is represented as a hydrogen bond term (hereinafter merely "$\delta$h" in some cases). These 3 parameters can define a coordinate in 3D space (HSP space). When 2 substances are represented as points based on HSP in HSP space, the nearer 2 molecules in the space exhibit higher compatibility with each other.

HSP is a vector quantity, and it is known that pure substances rarely have absolutely the same HSP values. Furthermore, for commonly used substances, databases have been established for their HSP values, allowing the industry professionals to obtain the HSP values of desired substances by referring the databases.

Even for substances with HSP values not registered in the databases, their HSP values can be calculated based on their chemical structures with software such as Hansen Solubility Parameters in Practice (HSPiP).

Further, for substances with HSP values not registered in the databases, their HSP values can be determined by solubility test with multiple solvents having known HSP values, and then entering the resulting solubility into HSPiP. In the case of a mixture containing multiple substances, the HSP value of the mixture is determined as the sum of the values calculated by multiplying the HSP value of each substance that is a constituent of the mixture, by its volume fraction in the overall mixture.

For information on HSP, for example, an article by Hiroshi Yamamoto, S. Abbott, and C. M. Hansen, published in the March 2010 issue of Kagaku Kogyo (Chemical Industry) can be referenced.

For information on HSP distance, for example, an article by Hiroshi Yamamoto, S. Abbott, and C. M. Hansen, published in the April 2010 issue of Kagaku Kogyo (Chemical Industry) can be referenced.

The HSP values in the present specification are determined in accordance with the solubility test described in an article by S. Abbott and C. M. Hansen, published in the March 2010 issue of Kagaku Kogyo (Chemical Industry), and an article by Hiroshi Yamamoto, S. Abbott, and C. M. Hansen, published in the April 2010 issue of Kagaku Kogyo (Chemical Industry). The detailed method for calculating HSP values and the interaction radius R0 is described in Examples described later in the present specification.

The aqueous dispersion composition of the present invention comprises the coalescing aid (B) having a Hansen solubility parameter with a dispersion term ($\delta$d) of 15.4 MPa$^{0.5}$ or more and less than 18.0 MPa$^{0.5}$, a polarization term ($\delta$p) of 4.1 MPa$^{0.5}$ or more and less than 9.1 MPa$^{0.5}$, and a hydrogen bond term ($\delta$h) of 7.0 MPa$^{0.5}$ or more and less than 12.3 MPa$^{0.5}$, therefore, the aqueous dispersion composition has high storage stability and film-forming properties, resulting in a coating film with high water resistance, tackiness, and adhesiveness.

The coalescing aid (B) has a Hansen solubility parameter with a dispersion term ($\delta$d) of preferably 15.4 MPa$^{0.5}$ or more and less than 18.0 MPa$^{0.5}$, and more preferably 15.8 MPa$^{0.5}$ or more and less than 17.0 MPa$^{0.5}$. The dispersion term ($\delta$d) within the range enhances compatibility with the polyester resin (A) and thus the coalescence of particles is promoted, resulting in further increase in the film-forming properties of the obtained coating film. As a result, mechanical strength is improved, and adhesiveness is also increased.

The coalescing aid (B) has a Hansen solubility parameter with a polarization term ($\delta$p) of preferably 4.1 MPa$^{0.5}$ or more and less than 9.1 MPa$^{0.5}$, and more preferably 4.5 MPa$^{0.5}$ or more and less than 6.5 MPa$^{0.5}$. The polarization term ($\delta$p) within above range improves particle stability of the polyester resin (A) and the generation of aggregates is reduced, resulting in improved storage stability, film-forming properties, and adhesiveness.

The coalescing aid (B) has a Hansen solubility parameter with a hydrogen bond term ($\delta$h) of preferably 7.0 MPa$^{0.5}$ or more and less than 12.3 MPa$^{0.5}$, and more preferably 7.0 MPa$^{0.5}$ or more and less than 12.1 MPa$^{0.5}$. The hydrogen bond term ($\delta$h) equal to or greater than the lower limit increases compatibility with water and thus water and the coalescing aid do not separate even over time, resulting in high storage stability. The hydrogen bond term ($\delta$h) equal to or lower than the upper limit allows the coating film formed from the aqueous dispersion composition to maintain high water resistance.

The coalescing aid (B) may be used alone or as a mixture of 2 or more coalescing aids. If 2 or more coalescing aids are used, the volumetric average of Hansen solubility parameters of the 2 or more coalescing aids needs to be adjusted within the above range. Accordingly, even if a coalescing aid has a Hansen solubility parameter out of the range specified in the present invention and cannot exhibit sufficient film-forming properties on its own, the combination of the 2 or more coalescing aids enables high film-forming properties.

Examples of the coalescing aid (B) that can be used alone include; ester solvents such as butyl lactate ($\delta$d: 15.8, $\delta$p: 6.5, $\delta$h: 10.2), triacetin ($\delta$d: 16.5, $\delta$p: 4.5, $\delta$h: 9.1), and triethyl citrate ($\delta$d: 16.5, $\delta$p: 4.9, $\delta$h: 12.0); glycol diester solvents such as propylene glycol diacetate ($\delta$d: 16.6, $\delta$p: 5.6, $\delta$h: 7.8) and 1,3-butylene glycol diacetate ($\delta$d: 16.5, $\delta$p: 5.2, $\delta$h: 7.2); glycol monoalkyl ether ester solvents such as ethylene glycol monoethyl ether acetate ($\delta$d: 15.9, $\delta$p: 4.7, $\delta$h: 10.6), diethylene glycol monoethyl ether acetate ($\delta$d: 16.2, $\delta$p: 5.1, $\delta$h: 9.2), diethylene glycol monobutyl ether acetate ($\delta$d: 16.0, $\delta$p: 4.1, $\delta$h: 8.2), dipropylene glycol monomethyl ether acetate ($\delta$d: 16.3, $\delta$p: 4.9, $\delta$h: 8.0), and propylene glycol monomethyl ether acetate ($\delta$d: 15.6, $\delta$p: 6.3, $\delta$h: 7.7); glycol dialkyl ether solvents such as tetraglyme ($\delta$d: 16.1, $\delta$p: 5.7, $\delta$h: 7.0); glycol monoalkyl ether solvents such as triethylene glycol monoethyl ether ($\delta$d: 16.3, $\delta$p: 7.1, $\delta$h: 10.8), diethylene glycol monobutyl ether ($\delta$d: 16, $\delta$p: 7.0, $\delta$h: 10.6), triethylene glycol monobutyl ether ($\delta$d: 16.2, $\delta$p: 6.1, $\delta$h: 9.1), ethylene glycol monohexyl ether ($\delta$d: 16.0, $\delta$p: 5.0, $\delta$h: 11.4), ethylene glycol monobenzyl ether ($\delta$d: 17.8, $\delta$p: 5.9, $\delta$h: 12.2), diethylene glycol monohexyl ether ($\delta$d: 16.0, $\delta$p: 6.0, $\delta$h: 10.0), dipropylene glycol monomethyl ether ($\delta$d: 16.2, $\delta$p: 6.4, $\delta$h: 9.9), tripropylene glycol monomethyl ether ($\delta$d: 16.2, $\delta$p: 5.9, $\delta$h: 8.3), dipropylene glycol monopropyl ether ($\delta$d: 15.6, $\delta$p: 6.1, $\delta$h: 11.0), dipropylene glycol monobutyl ether ($\delta$d: 15.7, $\delta$p: 6.5, $\delta$h: 10.0), and tripropylene glycol monobutyl ether ($\delta$d: 16.0, $\delta$p: 5.3, $\delta$h: 7.2); alcohol solvents such as diacetone alcohol ($\delta$d: 15.8, $\delta$p: 8.2, $\delta$h: 10.8) and agathenediol ($\delta$d: 17.0, $\delta$p: 4.2, $\delta$h: 7.9). Among them, compounds having an ester group such as the ester solvents, the glycol diester solvents, and the glycol monoalkyl ether ester solvents are preferred due to high compatibility with the polyester resin (A) and high film-forming properties. A compound having an ether group is preferred from the viewpoint of affinity with both of water and the polyester resin in the aqueous dispersion composition, and triethylene glycol monobutyl ether is preferred among them. These compounds having an ester group or an ether group may work more effectively and advantageously in the aqueous dispersion composition than compounds lacking these functional groups but having comparable HSP value.

The compounds exemplified below are not suitable as coalescing aids (B) on their own, however, as described above, by adjusting the volumetric average of Hansen solubility parameters within the above range, these compounds can be used as coalescing aids (B). Examples of these coalescing aid include; diol solvents such as 1,2-propanediol ($\delta$d: 16.8, $\delta$p: 10.4, $\delta$h: 21.3), 1,3-propanediol ($\delta$d: 16.8, $\delta$p: 13.5, $\delta$h: 23.2), 1,3-butanediol ($\delta$d: 16.5, $\delta$p: 8.1, $\delta$h: 20.9), 1,4-butanediol ($\delta$d: 16.6, $\delta$p: 11, $\delta$h: 20.9), 1,2-pentanediol ($\delta$d: 16.8, $\delta$p: 7.8, $\delta$h: 17.7), 1,5-pentanediol ($\delta$d: 17.0, $\delta$p: 8.9, $\delta$h: 18.9), 1,2-hexanediol ($\delta$d: 16.7, $\delta$p: 7.1, $\delta$h: 17.5), and 1,6-hexanediol ($\delta$d: 15.7, $\delta$p: 8.4, $\delta$h: 17.8); ketone solvents

such as isophorone ($\delta$d: 17.0, $\delta$p: 8, $\delta$h: 5.0) and dibutyl ketone ($\delta$d: 16.0, $\delta$p: 7.7, $\delta$h: 4.4); glycol diester solvents such as 1,6-hexanediol diacetate ($\delta$d: 15.3, $\delta$p: 4.5, $\delta$h: 7.2); glycol monoalkyl ether ester solvents such as ethylene glycol monobutyl ether acetate ($\delta$d: 15.3, $\delta$p: 7.5, $\delta$h: 6.8); glycol monoalkyl ether solvents such as ethylene glycol monobutyl ether ($\delta$d: 16.0, $\delta$p: 5.1, $\delta$h: 12.3), ethylene glycol mono-tert-butyl ether ($\delta$d: 15.3, $\delta$p: 6.1, $\delta$h: 10.8), diethylene glycol monomethyl ether ($\delta$d: 16.2, $\delta$p: 7.8, $\delta$h: 12.6), diethylene glycol monoethyl ether ($\delta$d: 16.1, $\delta$p: 9.2, $\delta$h: 12.2), triethylene glycol monomethyl ether ($\delta$d: 16.2, $\delta$p: 7.6, $\delta$h: 12.5), ethylene glycol monopropyl ether ($\delta$d: 16.1, $\delta$p: 8.7, $\delta$h: 13.5), and propylene glycol monobutyl ether ($\delta$d: 15.3, $\delta$p: 4.5, $\delta$h: 9.2); glycol solvents such as diethylene glycol ($\delta$d: 16.6, $\delta$p: 12, $\delta$h: 19), triethylene glycol ($\delta$d: 16, $\delta$p: 12.5, $\delta$h: 18.6), dipropylene glycol ($\delta$d: 16.7, $\delta$p: 8.2, $\delta$h: 15.5), and tripropylene glycol ($\delta$d: 16.6, $\delta$p: 7.0, $\delta$h: 12.5); glycol dialkyl ether solvents such as diethylene glycol dimethyl ether ($\delta$d: 15.7, $\delta$p: 6.1, $\delta$h: 6.5), triethylene glycol dimethyl ether ($\delta$d: 16.1, $\delta$p: 5.8, $\delta$h: 6.8), diethylene glycol diethyl ether ($\delta$d: 15.8, $\delta$p: 5.9, $\delta$h: 5.6), diethylene glycol butyl methyl ether ($\delta$d: 15.9, $\delta$p: 4.8, $\delta$h: 5.6), diethylene glycol dibutyl ether ($\delta$d: 15.8, $\delta$p: 4.7, $\delta$h: 4.4), triethylene glycol butyl methyl ether ($\delta$d: 15.9, $\delta$p: 4.3, $\delta$h: 4.2), propylene glycol dimethyl ether ($\delta$d: 15.4, $\delta$p: 5.3, $\delta$h: 5.0), tripropylene glycol dimethyl ether ($\delta$d: 15.9, $\delta$p: 4.8, $\delta$h: 4.5), and dipropylene glycol dimethyl ether ($\delta$d: 15.8, $\delta$p: 4.9, $\delta$h: 4.7); alcohol solvents such as 3-phenyl-1-propanol ($\delta$d: 18.2, $\delta$p: 5.1, $\delta$h: 10.5) and 1-dodecanol ($\delta$d: 16.0, $\delta$p: 4.0, $\delta$h: 9.3); and amide solvents such as N-methylpyrrolidone ($\delta$d: 18.0, $\delta$p: 12.3, $\delta$h: 7.2) and N-ethylpyrrolidone ($\delta$d: 18.0, $\delta$p: 12.0, $\delta$h: 7.0).

The coalescing aid (B) is also available as an organic solvent for preparing an aqueous dispersion of the polyester resin (A), either alone or in combination of 2 or more.

The aqueous dispersion composition comprises the coalescing aid (B) in an amount of preferably from 1% by mass to 20% by mass, and more preferably from 1% by mass to 15% by mass to achieve high storage stability, film-forming properties, tackiness, and adhesiveness. The amount of coalescing aid (B) within the range can increase film-forming properties and the stability of the dispersed particles of aqueous dispersion of polyester resin, resulting in improved storage stability, tackiness, adhesiveness, and water resistance.

<Aqueous medium (C)>

The aqueous medium (C) in the present invention is preferably water from the viewpoint of safety and environmental load.

<Aqueous dispersion composition>

The aqueous dispersion composition of the present invention is an aqueous dispersion in which the polyester resin (A) is dispersed in the aqueous medium (C), and the aqueous dispersion composition further comprises the coalescing aid (B). The polyester resin can be made into the aqueous dispersion by the following methods; (a) is a method for dispersing the polyester resin (A) by dissolving the polyester resin (A) in the organic solvent capable of dissolving the polyester resin (A), followed by sequentially adding a basic compound and water, if needed; (b) is a method for dispersing the polyester resin (A) by adding the polyester resin (A), water, the organic solvent capable of dissolving the polyester resin (A), and, if needed, a basic compound followed by heating the resulting solution. In the case of the polyester resin (A) of the present invention, the method (a) is preferred due to dispersibility in water. If there is a need to prepare the aqueous dispersion by reducing the amount of the organic solvent or by completely removing the organic solvent, the polyester resin (A) may be initially dispersed with the organic solvent having a boiling point of 100°C or lower and then the organic solvent will be removed by heating or under reduced pressure.

When the polyester resin (A) is made into the aqueous dispersion by the method (a), the temperature at which the polyester resin (A) is dissolved is preferably from 40°C to 160°C, more preferably from 50°C to 140°C, further preferably from 60°C to 120°C, and most preferably from 70°C to 100°C. The temperature lower than 40°C may cause insufficient dissolution of the polyester resin (A), leading to insufficient untangling of molecular chains. The temperature higher than 160°C may cause the risk of degradation of the polyester resin (A). Examples of the organic solvent capable of dissolving the polyester resin (A) by heating at a temperature ranging from 40°C to 160°C include methyl ethyl ketone, dimethylacetamide, dimethylformamide, N-methylpyrrolidone, tetrahydrofuran, 1,4-dioxane, 1,3-dioxane, 1,3-dioxolane, 1,2-hexanediol, methyl cellosolve, butyl cellosolve, tert-butyl cellosolve, propylene glycol monobutyl ether, and diethylene glycol monoethyl ether. Among them, methyl ethyl ketone, butyl cellosolve, and tert-butyl cellosolve are preferred.

The organic solvent having a boiling point of 100°C or lower used in the preparation of the aqueous dispersion may remain in the aqueous dispersion to the extent that the solvent's effect is not impaired. The residual amount of the organic solvent is preferably as low as possible considering of its effect on the HSP value of the coalescing aid (B). The residual amount of the organic solvent having a boiling point of 100°C or lower is, for example, preferably 1% by mass or less, more preferably 0.1% by mass or less, and most preferably, the residual amount is practically zero in the aqueous dispersion composition.

When the polyester resin (A) is dissolved at 100°C or higher, the aqueous dispersion needs to be prepared by cooling the polyester resin solution to 100°C or lower and subsequently conducting phase transition with the sequential addition of water and, if necessary, a basic compound while stirring the resin solution.

The basic compound for preparing an aqueous dispersion of the polyester resin (A) of the present invention is preferably a compound that volatilizes during drying and baking process in the formation of the coating film, and an ammonia and/or an organic amine compound having a boiling point of 250°C or lower can be employed. Preferably, examples of the basic compound include triethylamine, N,N-diethylethanolamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, dimethylaminopropylamine, methyliminobispropylamine, 3-methoxypropylamine, monoethanolamine, diethanolamine, triethanolamine, morpholine, N-methylmorpholine, and N-ethylmorpholine. The basic compound needs to be added in an amount sufficient for partial neutralization of the carboxy groups of polyester resin (A), and the amount of addition is specifically from 0.5 equivalent to 1.5 equivalent with respect to carboxy group equivalent. These basic compounds may be used alone or in combination of 2 or more.

The aqueous dispersion composition of the present invention has an average particle size of preferably from 10 nm to 300 nm, more preferably from 35 nm to 250 nm, and further preferably from 40 nm to 200 nm from the viewpoint of storage stability and film-forming properties. The average particle size of more than 300 nm may cause decreases in dispersion stability and film-forming properties, resulting in deterioration in appearance of the obtained coating film. The average particle size of less than 10 nm can significantly improve film-forming properties; however, fusion and aggregation of dispersed particles may be caused, resulting in thickening and insufficient dispersion.

The aqueous dispersion composition of the present invention is prepared to have a resin solids concentration of preferably from 5% by mass to 45% by mass, more preferably from 10% by mass to 40% by mass, further preferably from 15% by mass to 38% by mass, and most preferably from 20% by mass to 35% by mass. The resin solids concentration of more than 45% by mass may cause increased viscosity of the aqueous dispersion and facilitated aggregation of resin particles, resulting in significant decrease in dispersion stability. The resin solids concentration of less than 5% by mass is not practical from the viewpoint of manufacturing and application.

The aqueous dispersion composition of the present invention may contain, if needed, multiple polyester resins and other resins capable of forming a coating film. These resins are not particularly limited, and may be, for example, an acrylic resin, a polyester resin, an alkyd resin, an epoxy resin, and a urethane resin.

The aqueous dispersion composition of the present invention may contain a curing agent. A generally used curing agent are available as the curing agent. Examples of the curing agent include a melamine compound, a blocked isocyanate, water-dispersed isocyanate, an epoxy compound, an aziridine compound, a carbodiimide compound, an oxazoline compound, and a metal ion. A melamine compound resin and/or a blocked isocyanate are generally employed from the viewpoint of performances and the cost of the resulting coating films.

A melamine resin as the curing agent is not particularly limited and may be water-soluble or non-water-soluble melamine resin, and is, for example, preferably a melamine resin having an alkyl ether group, more preferably a melamine resin having methoxy and/or butoxy groups. Examples of the melamine resin include; melamine resins having methoxy group alone such as SUMIMAL M-30W, SUMIMAL M-40W, SUMIMAL M-50W, SUMIMAL MC-1 (all manufactured by Sumitomo Chemical Co., Ltd.), Cymel 325, Cymel 327, Cymel 370, Mycoat 723; melamine resins having both of methoxy and butoxy groups such as Cymel 202, Cymel 204, Cymel 232, Cymel 235, Cymel 236, Cymel 238, Cymel 254, Cymel 266, and Cymel 267 (product names, all manufactured by Mitsui Cytec, Ltd.); and melamine resins having butoxy group alone such as Mycoat 506 (all product names, manufactured by Mitsui Cytec, Ltd.), U-Van 20N60, U-Van 20SE (product names, all manufactured by Mitsui Chemicals, Inc.), and SUPER BECKAMINE (manufactured by DIC Corporation). These may be used alone or in combination of 2 or more. Among them, SUMIMAL M-40W and SUMIMAL MC-1 are more preferred.

The blocked isocyanate is a compound obtained by adding a blocking agent having an active hydrogen to polyisocyanates such as tolylene diisocyanate, hexamethylene diisocyanate, xylene diisocyanate, and isophorone diisocyanate, and that generates an isocyanate group due to dissociation of the blocking agent by heating, enabling curing through the reaction with a functional group in the resin component.

When the curing agent is contained, the amount of the curing agent is preferably from 5 parts by mass to 40 parts by mass with respect to 100 parts by mass of the solid contents of the aqueous dispersion composition. The amount of the curing agent lower than 5 parts by mass may cause insufficient curing properties, and the amount greater than 40 parts by mass may result in too hard a coating film.

After the application of the aqueous dispersion composition to a substrate, a condition for drying is not particularly limited, and drying is conducted under the condition of preferably from 40°C to 250°C. The temperature lower than 40°C is impractical in industrial production due to longer time required for drying. In addition, the coating film may not be completely dried. The temperature higher than 250°C is not desirable due to the need for a high-capacity drying furnace. The method for drying is not particularly limited, and a known method can be employed, for example, a method with a hot wind dryer, induction heating, near infrared ray heating, far-infrared ray heating, or an indirect heating. In case where the aqueous dispersion composition is applied to a steel plate, the steel plate may be pre-heated, then the aqueous dispersion composition may be applied to the hot steel plate, and the aqueous dispersion composition will be dried by residual heat of the plate.

The aqueous dispersion composition of the present invention can be applied to an object by a known method. The resulting coating film has a thickness of, for example, from 0.1 μm to 20 μm.

The aqueous dispersion composition of the present invention may contain additives such as a plasticizer, an antistatic agent, a wax, a surfactant, an optical stabilizer, a fluidity modifier, a dye, a leveling agent, and a rheology controlling agent, a UV absorber, an antioxidant, an optical photocatalytic compound, an inorganic pigment, an organic pigment, an extender pigment, and a coloring material, if needed. The resulting aqueous dispersion composition containing the additive is suitable for a water-based adhesive, a water-based paint, a water-based ink, and a water-based coating agent.

EXAMPLES

Hereinafter, the present invention will be described further in detail with Examples, however, the scope of the present invention is not limited to the Examples. The evaluations of characteristics were conducted in accordance with the methods described below. In the following, merely described "part" means "part by mass" and "%" means "% by mass". In Examples and Comparative Examples, the values of the dispersion term ($\delta$d), polarization term ($\delta$p), and hydrogen bond term ($\delta$h) of the HSP value of the coalescing aid were determined by referring to constants registered in a known database (Hansen Solubility Parameters in Practice (HSPiP) Version 5.3.06).

(1) Measurement of resin composition

A polyester resin sample was dissolved in deuterochloroform, and the resulting solution was analyzed by $^1$H-NMR with a nuclear magnetic resonance (NMR) system (model: 400-MR, manufactured by Varian, Inc.). A molar ratio was determined based on the integrated values.

(2) Measurement of reduced viscosity (unit: dl/g)

A sample of 0.1g of polyester resin was dissolved in a 25 cc of a mixed solution of phenol/tetrachloroethane (6/4, mass ratio), and the resulting solution was measured at 30°C.

(3) Measurement of melting point (Tm) and glass transition temperature (Tg)

The measurement was conducted with a differential scanning calorimeter (model: DSC-200, manufactured by Seiko Instruments Inc.). A sample of 5 mg of polyester resin was placed in an aluminum sample pan and the sample pan was tightly closed with a lid. The aluminum sample pan containing the polyester resin was cooled to -50°C with liquid nitrogen, and heated to 150°C at a rate of 20°C/min. The maximum peak temperature of the heat of fusion was determined as a crystalline melting point (Tm, unit: °C). In the endothermic curve obtained in this process, a glass transition temperature (Tg, unit: °C) was determined from a temperature at an intersection of a baseline before the emergency of the endothermic peak and a tangent line toward the endothermic peak.

(4) Measurement of ionic group concentration

(4-1) Concentration of carboxy group

A sample of 0.2 g of polyester resin was dissolved in 20 ml of chloroform and the resulting solution was titrated with 0.01N potassium hydroxide (ethanol solution) to determine potassium hydroxide equivalent with respect to the polyester resin. The measurement result was converted and expressed in the unit of mgKOH/g. Phenolphthalein was used as an indicator.

(4-2) Concentration of sodium salt of sulfonic acid

A sample of 0.5 g of polyester resin was weighed out and placed in a platinum crucible, then precarburized at 400°C on a hotplate, and subjected to ashing treatment at 550°C for 8 hours with an electric furnace (model: FO610, manufactured by Yamato Scientific Co. Ltd.). After the ashing treatment, the residue was dissolved in 20 mL of 1.2N hydrochloric acid to give a measurement solution. Subsequently, the measurement solution was analyzed with high frequency inductively coupled plasma optical emission analyzer (SPECTROBLUE; manufactured by Hitachi High-Tech Science Corporation) at a plasma gas output of 1400 W and a plasma gas flow rate of 12 L/min to determine the concentration of sodium. The concentration of sodium was determined as the concentration of the sodium salt of sulfonic acid, and the results were converted and expressed in the unit of mgKOH/g.

(5) Average particle size

The average particle size of the aqueous dispersion of polyester resin was measured with a laser diffraction and scattering particle size distribution analyzer (model: LS13 320, a coulter counter manufactured by Beckman Coulter, Inc.). The resulting frequency distribution curve was on the volume basis and the average diameter in the distribution curve was determined as the average particle size.

(6) Viscosity

In a glass bottle (size: 140cc), the aqueous dispersion of the polyester resin or the aqueous dispersion composition was poured. The viscosity of the aqueous dispersion of polyester resin was determined by measuring it for 1 minute at a rotation speed of 60 rpm in a thermostatic chamber set at 25°C with a viscometer (model: BL, manufactured by TOKIMEC INC.) equipped with a rotor No. 1.

(7) Storage stability

In a glass bottle (size: 140cc), the aqueous dispersion composition was poured and placed in an incubator set at 25°C to be preserved for 30 days. Then, changes in appearance were evaluated, and changes in shape (viscosity) were evaluated according to the method for measuring viscosity described above.

<Evaluation criteria>

Excellent: no change in appearance and shape, with a change in viscosity of less than 20%.
Good: cloudiness and sediment were observed, with a change in viscosity of 20% or more and less than 40%.
Acceptable: cloudiness and sediment were observed, with a change in viscosity of 40% or more and less than 60%.
Unsatisfactory: a change in viscosity of 60% or more. Separation or insufficient dispersion was observed.

Preparation of laminated film for evaluation

The aqueous dispersion composition was applied to the corona treated surface of a 25 $\mu$m thick polyester film (type: E5107, manufactured by TOYOBO CO., LTD.) with a bar coater No.24, and dried at 120°C for 1 minute to form a laminated film for evaluation including a thin film with a thickness of approximately 8 $\mu$m.

(8) Method for evaluating film-forming properties

The laminated film for evaluation obtained as described above was visually inspected to evaluate film-forming properties according to the following evaluation criteria.

<Evaluation criteria>

Excellent: no cracks and no blushing were observed.
Good: significantly slight blushing was observed.
Acceptable: slight cracks and slight blushing were observed at a part of coating film.
Unsatisfactory: apparent cracks and blushing were observed over entire coating film.
Bad: coating film was not formed, and the resulting film was in a fragmented state.

(9) Tackiness

The surfaces of the laminated film for evaluation were rubbed by hands in an environment at a temperature of 25°C, and the tackiness was evaluated according to the following evaluation criteria.

<Evaluation criteria>

Excellent: thin film with no tack.
Good: thin film with slight tack, but acceptable in practical use.
Acceptable: thin film with tack, but no adhesion of thin films.
Unsatisfactory: thin film with tack and with adhesion of thin films.

(10) Water resistance

A test piece of a laminated film for evaluation (2.5 cm×8.0 cm) was immersed in 200 ml of pure water at 80°C for 30 minutes. Subsequently, the test piece was pulled out of the water, then rinsed with pure water, and dried at 50°C for 1 hour. The test piece was visually inspected to evaluate the degree of peeling and blushing according to the following criteria.

<Evaluation criteria>

Excellent: no change compared to the state before the test.
Good: slight peeling or slight blushing of coating film was observed.
Acceptable: peeling or blushing was observed over entire coating film.
Unsatisfactory: peeling off of almost entire coating film.

Preparation of test piece for evaluation

The aqueous dispersion composition was applied to one surface of a tin plate (JIS G 3303(2008) SPTE, 70 mm×150 mm×0.3 mm) with a bar coater No. 24 and dried at 120°C for 1 minute to form a test piece including a thin film with a thickness of approximately 8 μm.

(11) Adhesiveness

On the surface of the coating film formed on a test plate, six parallel lines were drawn horizontally and six parallel lines were drawn vertically so as to be intersected with each other, with a cutter knife each at a distance of 1 millimeter and at a depth reaching the bottom, so that the intersected lines at right angles formed 25 squares measuring 1 mm×1 mm in accordance with a cross-cut test described in JISK-5600-5-6. On the surface, cellophane adhesive tape was attached and rapidly removed, and the degree of peeling of the squares was evaluated according to the following criteria.

<Evaluation criteria>

Excellent: no peeling of coating film, or peeling of coating film with the remaining number of squares of 20 or more.
Good: peeling of coating film was observed, and the remaining number of squares was 10 or more and less than 20.
Acceptable: peeling of coating film was observed, and the remaining number of squares was 5 or more and less than 10.
Unsatisfactory: peeling of coating film was observed, and the remaining number of squares was less than 5.

Synthesis Example of polyester resin (A)

Synthesis of polyester resin (a-1)

In a 4-necked flask (size: 3 L) in a reaction vessel equipped with an agitator, a thermometer, a heater, a cooling device, a distillation condenser, 450 parts by mass of dimethyl terephthalate, 430 parts by mass of dimethyl isophthalate, 35 parts by mass of sodium 5-sulfoisophthalate, 290 parts by mass of ethylene glycol, 480 parts by mass of 2,2-dimethyl-1,3-propanediol, and 0.5 parts by mass (0.03 mol% with respect to the total polycarboxylic acid component) of a catalyst of tetra-n-butyl titanate (hereinafter merely "TBT" in some cases) were charged, and ester exchange reaction was conducted for 4 hours by heating the flask containing the starting materials up to 230°C. After the completion of the ester exchange reaction, the pressure of the inside of the reaction system was reduced to 10 torr over 60 minutes while heating the system up to 240°C, then the pressure was further reduced to vacuum of 1torr or less, and polycondensation reaction was conducted at 240°C for 60 minutes under the pressure. Then, nitrogen was introduced into the system to break the vacuum, and the polycondensation reaction was completed. After the completion of the reaction, the resulting polyester resin was taken out of the flask and cooled to obtain a polyester resin of Synthesis Example (a-1). The obtained polyester resin was analyzed by NMR and the results showed that the molar ratio of the polycarboxylic acid component was as follows: terephthalic acid /isophthalic acid/sodium 5-sulfoisophthalate =50/47.5/2.5 and the molar ratio of the polyol component was ethylene glycol/2,2-dimethyl-1,3-propanediol=50/50. The obtained polyester resin had a reduced viscosity of 0.50 dl/g, a glass transition temperature (Tg) of 65°C, an ionic group concentration derived from a carboxy group of 1 mgKOH/g, and an ionic group concentration derived from a sodium salt of sulfonic acid of 7 mgKOH/g.

Synthesis of polyester resins (a-2) to (a-8)

The polyester resins (Synthesis Examples (a-2) to (a-8)) were produced in the same manner as the synthesis of polyester resin (a-1) except that the amounts of raw materials charged were changed so that the polyester resins (a-2) to (a-8) would have resin compositions as shown in Table 1. In case where the post addition of trimellitic anhydride or ethylene glycol bis-trimellitate dianhydride was conducted, the reaction system was cooled to 210°C under nitrogen atmosphere after the completion of the polycondensation reaction, then a predetermined amount of trimellitic anhydride or ethylene glycol bis-trimellitate dianhydride was introduced into the system, and the post addition reaction was conducted at a temperature of from 200 to 230°C under nitrogen atmosphere with continuous stirring for 30 minutes.

[Table 1]

| Synthesis Example | | | a-1 | a-2 | a-3 | a-4 | a-5 | a-6 | a-7 | a-8 | a-9 |
|---|---|---|---|---|---|---|---|---|---|---|---|
| Resin Composition | Polyvalent carboxylic acid components (mol%) | Terephthalic acid | 50 | 50 | 50 | 50 | 50 | 60 | 50 | 50 | 50 |
| | | Isophthalic acid | 47.5 | 43 | 47.5 | 50 | 46 | | 40 | 43 | 50 |
| | | Sodium 5-sulfoisophthalate | 2.5 | 7 | 2.5 | | 4 | 3.5 | 10 | 7 | |
| | | Adipic acid | | | | | | 36.5 | | | |
| | | Trimellitic anhydride (post-addition) | | | 2 | 2 | 2 | | | 2 | 0.8 |
| | | Ethylene glycol bistrimellitate dianhydride (post-addition) | | | | 1 | 1 | | | 1 | |
| | Polyol components (mol%) | Ethylene glycol | 50 | 50 | 50 | 50 | 50 | 40 | 50 | 50 | 50 |
| | | Neopentyl glycol | 50 | 50 | 50 | 50 | 50 | | 50 | 50 | 50 |
| | | 1,4-Butanediol | | | | | | 59 | | | |
| | | Poly(tetramethylene ether) glycol (Average molecular weight: 1000) | | | | | | 1 | | | |
| Resin characteristics | | Reduced viscosity (dl/g) | 0.50 | 0.50 | 0.50 | 0.50 | 0.50 | 0.50 | 0.50 | 0.50 | 0.50 |
| | | Tg (°C) | 65 | 63 | 65 | 65 | 65 | -15 | 63 | 63 | 63 |
| | | Tm (°C) | - | - | - | - | - | 110 | - | - | - |
| | | Concentration of ionic group: COOH (mgKOH/g) | 1 | 1 | 10 | 18 | 18 | 1 | 1 | 18 | 4 |
| | | Concentration of ionic group: $SO_3Na$ (mgKOH/g) | 7 | 18 | 7 | 0 | 10 | 9 | 25 | 18 | 0 |

EP 4 455 209 A1

13

Production of aqueous dispersion of polyester resin (d-1)

In a 3-necked separable flask equipped with a thermometer, a condenser, and an impeller, 300 parts by mass of polyester resin (a-1) and 270 parts by mass of methyl ethyl ketone were charged, and the polyester resin was dissolved into the solvent at 70°C. Subsequently, 0.1 parts by mass of ammonia as a base was added followed by the addition of 780 parts by mass of ion-exchanged water at 70°C, and the polyester resin was dispersed in water. The aqueous dispersion thus obtained was then subjected to distillation in a distillation flask, and methyl ethyl ketone was removed by the distillation conducted until the distillation temperature reached 100°C. After cooling to 90°C, 60 parts by mass of warm water was added over 30 minutes, and an aqueous dispersion of polyester resin (d-1) with a solids concentration of 30% by mass was obtained. The measurement results of average particle size and the viscosity of the aqueous dispersion of the polyester resin (d-1) are shown in Table 2.

Production of aqueous dispersion of polyester resin (d-2) to (d-8)

The aqueous dispersion of the polyester resin (d-2) to (d-8) was produced in the same manner as the synthesis example of the aqueous dispersion of polyester resin (d-1) except that the polyester resins were changed as shown in Table 2. The measurement results of average particle sizes and the viscosities of the aqueous dispersion of polyester resin are shown in Table 2.

[Table 2]

| Aqueous dispersion composition | d-1 | d-2 | d-3 | d-4 | d-5 | d-6 | d-7 | d-8 | d-9 |
|---|---|---|---|---|---|---|---|---|---|
| Polyester resin | a-1 | a-2 | a-3 | a-4 | a-5 | a-6 | a-7 | a-8 | a-9 |
| Average particle size (nm) | 60 | 50 | 55 | 60 | 60 | 100 | 50 | 60 | Not dispersed in water |
| Viscosity (dPa·s) | 0.3 | 0.2 | 0.2 | 0.2 | 0.1 | 0.8 | 0.1 | 0.1 | |
| Solids concentration (% by mass) | 30 | 30 | 30 | 30 | 30 | 30 | 30 | 30 | |

Example 1

To 90 parts by mass of the obtained aqueous dispersion of polyester resin (d-1), 10 parts by mass of triethylene glycol monobutyl ether (coalescing aid (b-1)) was added and mixed to give an aqueous dispersion composition containing polyester resin. The resulting aqueous dispersion composition was analyzed to evaluate storage stability, film-forming properties, tackiness, adhesiveness, and water resistance. The evaluation results are shown in Table 3.

Examples 2 to 17 and Comparative Examples 1 to 8

The aqueous dispersion compositions were obtained in the same manner as Example 1 except that the types and the amounts of the aqueous dispersion of polyester resin and the coalescing aids were changed as shown in Tables 3 and 4. The resulting aqueous dispersion compositions were analyzed to evaluate storage stability, film-forming properties, tackiness, adhesiveness, and water resistance. The evaluation results are shown in Tables 3 and 4.
The followings are coalescing aids in Examples and Comparative Examples.

Coalescing aid (b-1): triethylene glycol monobutyl ether ($\delta$d: 16.2, $\delta$p: 6.1, $\delta$h: 9.1)
Coalescing aid (b-2): ethylene glycol monobenzyl ether ($\delta$d: 17.8, $\delta$p: 5.9, $\delta$h: 12.2)
Coalescing aid (b-3): propylene glycol monomethyl ether acetate ($\delta$d: 15.6, $\delta$p: 6.3, $\delta$h: 7.7)
Coalescing aid (b-4): diacetone alcohol ($\delta$d: 15.8, $\delta$p: 8.2, $\delta$h: 10.8)
Coalescing aid (b-5): triacetin ($\delta$d: 16.5, $\delta$p: 4.5, $\delta$h: 9.1)
Coalescing aid (b-6): tetraglyme ($\delta$d: 16.1, $\delta$p: 5.7, $\delta$h: 7.0)
Coalescing aid (b-7): agathenediol ($\delta$d: 17.0, $\delta$p: 4.2, $\delta$h: 7.9)
Coalescing aid (b-8): diethylene glycol ($\delta$d: 16.6, $\delta$p: 12.0, $\delta$h: 19.0)
Coalescing aid (b-9): 3-phenyl-1-propanol ($\delta$d: 18.2, $\delta$p: 5.1, $\delta$h: 10.5)
Coalescing aid (b-10): ethylene glycol mono-tert-butyl ether ($\delta$d: 15.3, $\delta$p: 6.1, $\delta$h: 10.8)
Coalescing aid(b-11): diethylene glycol monoethyl ether ($\delta$d: 16.1, $\delta$p: 9.2, $\delta$h: 12.2)
Coalescing aid(b-12): 1-dodecanol ($\delta$d: 16.0, $\delta$p: 4.0, $\delta$h: 9.3)
Coalescing aid(b-13): ethylene glycol monobutyl ether ($\delta$d: 16.0, $\delta$p: 5.1, $\delta$h: 12.3)
Coalescing aid(b-14): triethylene glycol dimethyl ether ($\delta$d: 16.1, $\delta$p: 5.8, $\delta$h: 6.8)

In Example 17, the volume and the volume fraction were calculated from the part by mass and the density of the coalescing aids to determine HSP of a mixture of the coalescing aids. In Comparative Example 8, HSP value was calculated similarly as Example 15.

$$\text{Volume of triethylene glycol monobutyl ether}$$
$$= \text{part by mass of triethylene glycol monobutyl ether}$$
$$/ \text{density of triethylene glycol monobutyl ether}$$
$$= 7.48/0.99$$
$$= 7.56$$

$$\text{Volume of diethylene glycol}$$
$$= \text{part by mass of diethylene glycol}$$
$$/ \text{density of diethylene glycol}$$
$$= 2.52/1.119$$
$$= 2.25$$

$$\text{Volume fraction of triethylene glycol monobutyl ether (\%)}$$
$$= 7.56/(7.56+2.25) \times 100$$
$$= 77$$

$$\text{Volume fraction of diethylene glycol (\%)}$$
$$= 2.25/(7.56+2.25) \times 100$$
$$= 23$$

HSP value of mixed solvent
$$\delta d = \{(\text{volume fraction of triethylene glycol monobutyl ether (\%)}/100) \times (\delta d \text{ of triethylene glycol monobutyl ether})\}$$
$$+ \{(\text{volume fraction of diethylene glycol (\%)}/100) \times (\delta d \text{ of diethylene glycol})\}$$
$$= 77/100 \times 16.2 + 23/100 \times 16.6$$
$$= 16.3$$

$$\delta p = \{(\text{volume fraction of triethylene glycol monobutyl ether (\%)}/100) \times (\delta p \text{ of triethylene glycol monobutyl ether})\}$$
$$+ \{(\text{volume fraction of diethylene glycol (\%)}/100) \times (\delta p \text{ of diethylene glycol})\}$$
$$= 77/100 \times 6.1 + 23/100 \times 12.0$$
$$= 7.5$$

δh={(volume fraction of triethylene glycol monobutyl ether (%)/100)×(δh of triethylene glycol monobutyl ether)}

  +{(volume fraction of diethylene glycol (%)/100)×(δh of diethylene glycol)}

=77/100×9.1+23/100×19.0

=11.4

[Table 3]

| Example | | 1 | 2 | 3 | a | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| Composition | Aqueous dispersion composition | d-1 | d-2 | d-3 | d-4 | d-5 | d-6 | d-7 | d-8 | d-1 | d-1 | d-1 | d-1 | d-1 | d-1 | d-1 | d-1 | d-1 |
| | Amount (% by mass) | 90 | 90 | 90 | 90 | 90 | 90 | 90 | 90 | 97 | 82 | 90 | 90 | 90 | 90 | 90 | 90 | 90 |
| | Coalescing aid | b-1 | b-1 | b-1 | b-1 | b-1 | b-1 | b-1 | b-1 | b-1 | b-1 | b-2 | b-3 | b-4 | b-5 | b-6 | b-7 | b-1/b-8 |
| | Amount (% by mass) | 10 | 10 | 10 | 10 | 10 | 10 | 10 | 10 | 3 | is | 10 | 10 | 10 | 10 | 10 | 10 | 7.48/2.52 |
| HSP of coalescing aid (MPa$^{0.5}$) | $\delta d$ | 16.2 | 162 | 16.2 | 16.2 | 162 | 16.2 | 162 | 162 | 16.2 | 16.2 | 17.8 | 15.6 | 15.8 | 16.5 | 16.1 | 17.0 | 16.3 |
| | $\delta p$ | 6.1 | 6.1 | 6.1 | 6.1 | 6.1 | 6.1 | 6.1 | 6.1 | 6.1 | 6.1 | 5.9 | 6.3 | 8.2 | 4.5 | 5.7 | 4.2 | 7.5 |
| | $\delta h$ | 9.1 | 9.1 | 9.1 | 9.1 | 9.1 | 9.1 | 9.1 | 9.1 | 9.1 | 9.1 | 12.2 | 7.7 | 10.8 | 9.1 | 7.0 | 7.9 | 11.4 |
| Boiling point of coalescing aid (°C) | | 282 | 282 | 282 | 282 | 282 | 282 | 282 | 282 | 282 | 282 | 265 | 146 | 168 | 259 | 263 | 369 | 282/244 |
| Evaluation A1 | Storage stability | Excellent | Excellent | Excellent | Excellent | Excellent | Good | Good | Good | Excellent | Good | Excellent | Excellent | Good | Good | Good | Excellent | Excellent |
| | Film-forming properties | Good | Good | Good | Good | Good | Good | Good | Good | Good | Good | Good | Excellent | Good | Excellent | Good | Good | Good |
| | Tackiness | Excellent | Excellent | Excellent | Excellent | Excellent | Good | Excellent | Excellent | Excellent | Good | Excellent | Excellent | Excellent | Excellent | Excellent | Good | Excellent |
| | Adhesiveness | Excellent | Excellent | Excellent | Excellent | Excellent | Excellent | Excellent | Excellent | Good | Good | Good | Good | Excellent | Excellent | Excellent | Good | Excellent |
| | Water resistance | Excellent | Good | Excellent | Excellent | Good | Excellent | Acceptable | Acceptable | Good | Good | Good | Good | Excellent | Excellent | Excellent | Good | Excellent |

EP 4 455 209 A1

17

| Comparative Example | | 1 | 2 | 3 | 4 | 5 | 6 | 7 | 8 |
|---|---|---|---|---|---|---|---|---|---|
| Composition | Aqueous dispersion composition | d-1 | d-1 | d-1 | d-1 | d-1 | d-1 | d-1 | d-1 |
| | Amount (% by mass) | 90 | 90 | 90 | 90 | 90 | 90 | 90 | 90 |
| | Coalescing aid | b-8 | b-9 | b-10 | b-11 | b-12 | b-13 | b-14 | b-1/b-8 |
| | Amount (% by mass) | 10 | 10 | 10 | 10 | 10 | 10 | 10 | 5.91/4.09 |
| HSP of coalescing aid (MPa$^{0.5}$) | $\delta d$ | 16.6 | 18.2 | 10.3 | 16.1 | 16.0 | 16.0 | 16.1 | 16.4 |
| | $\delta p$ | 12.0 | 5.1 | 6.1 | 9.2 | 4.0 | 5.1 | 5.8 | 8.3 |
| | $\delta h$ | 19.0 | 10.5 | 10.8 | 12.2 | 9.3 | 12.3 | 6.8 | 12.9 |
| Boiling point of coalescing aid (°C) | | 245 | 233 | 152 | 202 | 264 | 171 | 279 | 282 |
| Evaluation | Storage stability | Unsatisfactory | Good | Good | Unsatisfactory | Unsatisfactory | Acceptable | Unsatisfactory | Acceptable |
| | Film-forming properties | Good | Unsatisfactory | Unsatisfactory | Acceptable | Bad | Good | Unsatisfactory | Good |
| | Tackiness | Excellent | Excellent | Excellent | Excellent | Excellent | Excellent | Excellent | Excellent |
| | Adhesiveness | Excellent | Unsatisfactory | Unsatisfactory | Unsatisfactory | Unsatisfactory | Excellent | Unsatisfactory | Excellent |
| | Water resistance | Unsatisfactory | Acceptable | Acceptable | Acceptable | Acceptable | Unsatisfactory | Acceptable | Unsatisfactory |

18

As shown in Table 3, the aqueous dispersion composition of the present invention has high storage stability, film-forming properties, tackiness, adhesiveness, and water resistance.

In Comparative Examples 1, 6, and 7, the hydrogen bond terms $\delta h$ of the coalescing aids were out of the specified range, resulting in decreased storage stability and water resistance. In Comparative Examples 2 and 3, the dispersion terms $\delta d$ of the coalescing aids were out of the specified range and thus the compatibility with the polyester resin was decreased, resulting in low film-forming properties and low adhesiveness caused by the decreased film-forming properties. In Comparative Examples 4 and 5, the polarization terms $\delta p$ of the coalescing aids were out of the specified range and thus the aqueous dispersion had decreased particle stability, resulting in low film-forming properties and adhesiveness. In Comparative Example 8, a mixture of coalescing aids had high hydrogen bond term $\delta h$, resulting in decreased water resistance.

INDUSTRIAL APPLICABILITY

The aqueous dispersion composition of the present invention exhibits significantly high storage stability and film-forming properties, in addition to high tackiness, water resistance, and adhesiveness, therefore, the aqueous dispersion composition is suitable for a water-based paint, a water-based ink, surface protective coating agent for a thermoplastic resin substrate, surface protective coating agent for a metal substrate, and an adhesive.

**Claims**

1. An aqueous dispersion composition containing polyester resin, comprises,

   a polyester resin (A),
   a coalescing aid (B), and
   an aqueous medium (C),
   wherein the coalescing aid (B) has a Hansen solubility parameter with a dispersion term ($\delta d$) of 15.4 MPa$^{0.5}$ or more and less than 18.0 MPa$^{0.5}$, a polarization term ($\delta p$) of 4.1 MPa$^{0.5}$ or more and less than 9.1 MPa$^{0.5}$, and a hydrogen bond term ($\delta h$) of 7.0 MPa$^{0.5}$ or more and less than 12.3 MPa$^{0.5}$.

2. The aqueous dispersion composition according to claim 1, wherein the polyester resin (A) has an ionic group at a concentration of from 5 mgKOH/g to 30 mgKOH/g, and an ionic group derived from a sulfo group at a concentration of 20 mgKOH/g or less.

3. The aqueous dispersion composition according to claim 1 or 2, wherein the aqueous dispersion composition comprises the coalescing aid (B) in an amount of from 1% by mass to 20% by mass.

4. The aqueous dispersion composition according to any one of claims 1 to 3, wherein the coalescing aid (B) is a compound having an ester group.

5. The aqueous dispersion composition according to any one of claims 1 to 4, wherein the coalescing aid (B) has a boiling point ranging from 140°C to 370°C.

6. A water-based adhesive comprising the aqueous dispersion composition according to any one of claims 1 to 5.

7. A water-based paint comprising the aqueous dispersion composition according to any one of claims 1 to 5.

8. A water-based ink comprising a coloring material and the aqueous dispersion composition according to any one of claims 1 to 5.

9. A water-based coating agent comprising the aqueous dispersion composition according to any one of claims 1 to 5.

10. A laminate comprising a layer A including the aqueous dispersion composition according to any one of claims 1 to 5 and a layer B selected from the group consisting of films, sheets, woven fabrics, nonwoven fabrics, and paper.

11. A packaging material comprising the laminate according to claim 10.

## INTERNATIONAL SEARCH REPORT

| International application No. |
|---|
| **PCT/JP2022/047138** |

### A. CLASSIFICATION OF SUBJECT MATTER

*C08L 67/00*(2006.01)i; *B32B 27/36*(2006.01)i; *C08G 63/688*(2006.01)i; *C08K 5/10*(2006.01)i; *C09D 5/00*(2006.01)i; *C09D 11/00*(2014.01)i; *C09D 167/00*(2006.01)i; *C09J 167/00*(2006.01)i
FI: C08L67/00; B32B27/36; C08G63/688; C08K5/10; C09D5/00 Z; C09D11/00; C09D167/00; C09J167/00

According to International Patent Classification (IPC) or to both national classification and IPC

### B. FIELDS SEARCHED

Minimum documentation searched (classification system followed by classification symbols)
B32B27/36; C09D5/00; C08K5/10; C08L67/00; C09D167/00; C09J167/00; C09D11/00; C08G63/688

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2005-89751 A (ROQUETTE FRERES) 07 April 2005 (2005-04-07) claims, paragraphs [0007]-[0008], [0013], [0055]-[0068], [0095]-[0096], [0104]-[0106], example 1 | 1-11 |
| X | JP 2012-62445 A (SHINSHU UNIV.) 29 March 2012 (2012-03-29) claims, paragraph [0069], examples, experimental no. 136, paragraph [0085] | 1-11 |
| X | JP 2016-102174 A (FUJITSU LTD.) 02 June 2016 (2016-06-02) claims, paragraphs [0012], [0026]-[0031], examples 1, 2 | 1, 3-11 |
| X | JP 2004-107413 A (MITSUI CHEMICALS, INC.) 08 April 2004 (2004-04-08) claims, paragraphs [0006], [0015]-[0017], example 2 | 1, 3-11 |
| A | WO 2014/125357 A1 (RHODIA POLIAMIDA E ESPECIALIDADES LTDA) 21 August 2014 (2014-08-21) | 1-11 |
| A | US 2021/0198179 A1 (INDUSTRIAL TECHNOLOGY RESEARCH INSTITUTE) 01 July 2021 (2021-07-01) | 1-11 |

✓ Further documents are listed in the continuation of Box C.  ✓ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 February 2023** | **28 February 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**

| International application No. |
| --- |
| **PCT/JP2022/047138** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2013/084590 A1 (DIC CORP.) 13 June 2013 (2013-06-13) | 1-11 |
| A | WO 2016/190080 A1 (DIC CORP.) 01 December 2016 (2016-12-01) | 1-11 |
| A | WO 2021/171705 A1 (KANSAI PAINT CO., LTD.) 02 September 2021 (2021-09-02) | 1-11 |

Form PCT/ISA/210 (second sheet) (January 2015)

**INTERNATIONAL SEARCH REPORT**
Information on patent family members

International application No.

**PCT/JP2022/047138**

| Patent document cited in search report | | | Publication date (day/month/year) | Patent family member(s) | | | Publication date (day/month/year) |
|---|---|---|---|---|---|---|---|
| JP | 2005-89751 | A | 07 April 2005 | US | 2005/0058712 | A1 | |
| | | | | claims, paragraphs [0007]-[0008], [0013], [0080]-[0094], [0113]-[0114], [0125]-[0127], example 1 | | | |
| | | | | EP | 1514891 | A1 | |
| | | | | FR | 2859729 | A1 | |
| | | | | CA | 2478883 | A1 | |
| | | | | KR | 10-2005-0027060 | A | |
| | | | | CN | 1613913 | A | |
| JP | 2012-62445 | A | 29 March 2012 | (Family: none) | | | |
| JP | 2016-102174 | A | 02 June 2016 | (Family: none) | | | |
| JP | 2004-107413 | A | 08 April 2004 | (Family: none) | | | |
| WO | 2014/125357 | A1 | 21 August 2014 | US | 2015/0361281 | A1 | |
| | | | | WO | 2014/125313 | A1 | |
| | | | | EP | 2956513 | A1 | |
| | | | | CN | 104995265 | A | |
| | | | | KR | 10-2015-0119129 | A | |
| US | 2021/0198179 | A1 | 01 July 2021 | CN | 113121319 | A | |
| | | | | TW | 202124346 | A | |
| WO | 2013/084590 | A1 | 13 June 2013 | US | 2014/0364552 | A1 | |
| | | | | EP | 2754694 | A1 | |
| | | | | CN | 103975017 | A | |
| | | | | TW | 201323497 | A | |
| WO | 2016/190080 | A1 | 01 December 2016 | US | 2018/0162983 | A1 | |
| | | | | EP | 3305854 | A1 | |
| | | | | CN | 107614616 | A | |
| | | | | TW | 201708388 | A | |
| WO | 2021/171705 | A1 | 02 September 2021 | JP | 6896198 | B1 | |
| | | | | CN | 115003767 | A | |
| | | | | CA | 3171321 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010024220 A

- JP 6249137 B

**Non-patent literature cited in the description**

- **HIROSHI YAMAMOTO ; S. ABBOTT ; C. M. HANSEN.** *Kagaku Kogyo (Chemical Industry),* March 2010

- **HIROSHI YAMAMOTO ; S. ABBOTT ; C. M. HANSEN.** *Kagaku Kogyo (Chemical Industry),* April 2010
- **S. ABBOTT ; C. M. HANSEN.** *Kagaku Kogyo (Chemical Industry),* March 2010